# FASCICULE DE BREVET EUROPEEN

(11) **EP 3 381 196 B1**
(45) Date de publication et mention de la délivrance du brevet: **22.04.2020**
(21) Numéro de dépôt: 16819333.2
(22) Date de dépôt: 22.11.2016
(51) Int. Cl.: H04N 21/81, H04N 21/43, H04N 21/8547, H04N 21/433, H04N 21/439

(54) **PROCÉDÉ DE SYNCHRONISATION D'UN FLUX AUDIO ALTERNATIF**
VERFAHREN ZUM SYNCHRONISIEREN EINES ALTERNATIVEN AUDIOSTROMS
METHOD FOR SYNCHRONISING AN ALTERNATIVE AUDIO STREAM

(30) Priorité: 27.11.2015 FR 1561504
(43) Date de publication de la demande: 03.10.2018
(73) Titulaire: Orange, 75015 Paris (FR)
(72) Inventeur: BECKER, Claudia, 35000 Rennes (FR); BESSET, Benoît, 35235 Thorigne Fouillard (FR); VEILLARD, Michel, 35170 Bruz (FR)
(86) Numéro de dépôt international: PCT/FR2016/053038
(87) Numéro de publication internationale: WO 2017/089690

(56) Documents cités:
- WO-A2-2012/049223
- US-B1- 6 630 963

## Description

### Domaine technique

La présente invention se rapporte au domaine audiovisuel et concerne plus particulièrement les techniques d'accès à une bande son alternative lors de la diffusion d'un programme audiovisuel.

### Art antérieur

Les techniques de diffusion et de radiodiffusion numériques offrent aujourd'hui la possibilité à des téléspectateurs de sélectionner différentes pistes audio lors de la consultation d'un programme audiovisuel. Par exemple, lors de la consultation d'un contenu en VOD (Video On Demande, pour Vidéo à la demande en anglais) ou d'un contenu « Live », un utilisateur peut choisir une langue parmi un ensemble de langues disponibles afin de visionner le programme en version originale, en version française ou en toute autre version proposée par le diffuseur du contenu. Ainsi, lorsqu'une piste audio alternative est sélectionnée, elle se substitue à la piste audio proposée par défaut par le diffuseur du contenu.

Il peut arriver, par exemple lorsqu'un contenu est consulté en famille, que la piste audio sélectionnée ne convienne pas à toutes les personnes présentes. Par exemple, un film en version originale peut convenir à des adultes et déplaire à des enfants qui regardent simultanément la télévision. Selon un autre cas d'usage, il peut arriver qu'un téléspectateur regardant une compétition sportive désire écouter un commentaire sportif alternatif, non proposé pas le diffuseur du contenu. Par exemple, lorsque la compétition est diffusée en direct à la télévision, un téléspectateur peut couper le son de son téléviseur et écouter le commentaire sur un poste de radio proposant en direct un autre commentaire pour le même évènement sportif. Dans un tel cas, les délais de radio-transmission des programmes télévisés et radiophoniques étant sensiblement différents, les contenus vidéo restitués sur le poste de télévision et le contenu audio restitué sur un poste de radio sont décalés et ne permettent pas de suivre le programme.

De même, cette façon de faire présente également des inconvénients lorsqu'un téléspectateur souhaite accéder à une variété de contenus audio alternatifs plus importante en sélectionnant par exemple un commentaire radiophonique diffusé sur Internet.

En effet, pour différentes raisons techniques, les délais de transmission d'un tel contenu sur le réseau Internet sont plus importants que dans le cas d'une transmission classique par voie hertzienne ou par un réseau de communication dédié. Le délai d'acheminement des paquets de données étant plus long dans le réseau Internet, on constate une désynchronisation du contenu depuis Internet par rapport à celui diffusé sur la télévision, même lorsque les contenus sont capturés ou produits de façon synchronisés. Il est alors impossible d'écouter un commentaire sportif diffusé sur Internet en remplacement du commentaire proposé sur un poste de télévision, les commentaires étant alors généralement en retard de plusieurs secondes par rapport à la vidéo restituée par le poste de télévision.

On connaît des techniques permettant de synchroniser un contenu téléchargé depuis Internet avec un programme télévisé. Par exemple, la demande de brevet européen EP 20130173023 décrit un procédé permettant de déclencher sur un terminal la restitution d'un contenu complémentaire de façon synchronisée avec la restitution d'un flux par un dispositif de restitution tel qu'une télévision. Malheureusement, ce procédé n'est pas adapté pour déclencher la lecture sur un premier terminal d'un premier flux audio alternatif diffusé en continu, tel qu'un flux diffusé selon une méthode de streaming, lorsque ce premier flux est injecté dans le réseau de façon synchronisée avec un contenu destiné à être restitué sur un dispositif de restitution tel qu'une télévision, et que ce premier flux subit un retard durant la transmission dans le réseau Internet.

Le document WO2012/049223A2 décrit un procédé permettant de fournir un flux audio alternatif à un contenu audiovisuel. Ce procédé consiste à déterminer la position de lecture en cours du contenu audiovisuel restitué, synchroniser le flux audio alternatif avec la position de lecture déterminée puis lire le flux audio alternatif synchronisé avec la position de lecture en cours.

Il existe donc bien un besoin pour synchroniser la lecture d'un flux en cours de diffusion sur un premier réseau à destination d'un premier terminal avec la lecture sur un second terminal d'un second flux en cours de diffusion sur un second réseau

L'invention vient améliorer la situation.

### Résumé de l'invention

À cet effet, l'invention concerne un procédé de synchronisation d'un premier flux audio restitué sous forme d'un signal sonore par un dispositif de restitution à proximité d'un terminal avec un flux audio alternatif reçu par le terminal, le procédé étant remarquable en ce que le terminal reçoit en outre un flux de contrôle représentatif du premier flux audio restitué sur le dispositif de restitution, le flux de contrôle et le flux audio alternatif étant synchronisés selon une même référence temporelle, et en ce qu'il comprend les étapes suivantes :
- Capture d'une partie du signal sonore,
- Émission, à destination du dispositif de restitution, d'une commande de suspension de la lecture du premier flux,
- Obtention d'une première donnée représentative d'au moins une partie du signal sonore capturé,
- Détection de la première donnée dans le flux de contrôle, et

Lorsque la première donnée est détectée dans le flux de contrôle:
- Émission, à destination du dispositif de restitution, d'une commande de reprise de la lecture du premier flux, et
- Restitution du flux audio alternatif reçu par le terminal.

On entend par dispositif de restitution un équipement permettant de restituer un contenu audiovisuel. Il peut s'agir par exemple d'une télévision, d'un décodeur numérique associé à une télévision ou encore d'un boitier de type « set top box ». Le terminal utilisé pour recevoir un flux audio remplaçant celui restitué sur un poste de télévision ou un décodeur, reçoit au moins deux flux synchronisés entre eux. L'un des flux au moins, dit flux de contrôle, est représentatif d'une des pistes audio du programme en cours de diffusion sur le téléviseur. Au moins un autre des flux reçus par le terminal est une piste audio alternative à celle diffusée sur le dispositif de restitution. Le terminal reçoit ainsi le flux de contrôle avec le même retard que le flux alternatif. Le flux de contrôle étant comparable au flux restitué sur la télévision, le terminal dispose d'une référence permettant d'aligner le contenu alternatif avec le contenu diffusé. Le terminal capture, par l'intermédiaire d'un microphone du terminal, une partie de signal sonore restitué par le dispositif de restitution et calcule une donnée représentative des échantillons audio capturés. Le terminal émet alors une commande à destination du dispositif de restitution afin de suspendre la restitution du programme audiovisuel. Cette suspension de la restitution peut être par exemple réalisée par une fonction « pause » offerte par le dispositif de restitution ou par le réseau de diffusion, pendant laquelle le contenu en cours de restitution sur le dispositif de restitution est mémorisé dans une mémoire jusqu'à la reprise de la lecture. Lorsque la donnée représentative des échantillons audio capturés est détectée dans le flux de contrôle, les flux sont synchronisés et le terminal émet une commande de reprise de la restitution à destination du dispositif de restitution et débute la restitution du flux alternatif sur le terminal.

Ainsi, l'invention permet la synchronisation d'un flux alternatif reçu par un terminal au travers d'un premier réseau avec un flux restitué sur un dispositif de restitution via un second réseau, lorsque le flux alternatif est reçu avec un retard par rapport au flux restitué sur un dispositif de restitution.

Selon un mode particulier de réalisation, le procédé est tel que la première donnée représentative est une empreinte acoustique calculée à partir d'au moins une partie du signal sonore capturé.

Une empreinte acoustique permet d'identifier de manière unique un extrait sonore. L'utilisation d'une empreinte acoustique permet d'identifier un extrait sonore issu d'un dispositif de restitution et de localiser cet extrait à l'intérieur d'un autre flux afin d'estimer et compenser le décalage entre les deux flux.

Selon une réalisation particulière, le procédé est tel qu'il comporte en outre les étapes suivantes :
- Obtention, à partir du flux de contrôle, d'une seconde donnée représentative d'une partie du signal audio dont le flux de contrôle est représentatif, et mémorisation d'une première estampille temporelle,
- Capture du signal sonore restitué par le dispositif de restitution,
- Détection de la seconde donnée à partir du signal sonore capturé, et Lorsque la seconde donnée est détectée dans le signal capturé :
- Détermination d'une seconde estampille temporelle, et
- Application d'un retard au flux audio alternatif, le retard correspondant à l'intervalle temporel entre les premières et secondes estampilles.

Les commandes de suspension et de reprise de la lecture n'offrent pas toujours la précision nécessaire à une parfaite synchronisation des flux reçus sur le terminal avec ceux restitués par le dispositif de restitution. Afin de palier à cet inconvénient, le procédé selon l'invention propose d'obtenir une donnée représentative d'une partie du flux reçu par le terminal et de rechercher cette empreinte dans le signal sonore capturé par l'intermédiaire d'un microphone du terminal, afin de calculer un retard éventuel du dispositif de restitution par rapport aux flux reçus par le terminal. Ce retard est ensuite appliqué aux flux restitués par le terminal afin d'améliorer la synchronisation lorsque les flux reçus par le terminal sont en avance par rapport au contenu restitué par le dispositif de restitution.

Selon un mode particulier de réalisation, le procédé est tel que la seconde donnée représentative est une empreinte acoustique calculée à partir d'une partie d'un signal audio.

Une empreinte acoustique permet d'identifier de manière unique un extrait sonore. L'utilisation d'une empreinte acoustique permet d'identifier un extrait sonore et de le localiser à l'intérieur d'un autre flux afin d'estimer et compenser le décalage entre les deux flux.

Selon une réalisation particulière, le procédé est remarquable en ce que le flux de contrôle est un flux audio.

Le flux de contrôle peut être un flux audio correspondant au contenu en cours de restitution sur un dispositif de restitution tel qu'un téléviseur. Ainsi, le flux de contrôle peut être une duplication de la bande son d'un contenu audiovisuel en cours de restitution. Ce flux de contrôle peut alors servir de base au calcul d'une empreinte acoustique qui, lorsqu'elle correspond à une empreinte acoustique calculée à partir du signal sonore généré par le téléviseur, permet d'estimer et de compenser le décalage constaté entre les flux.

Le flux de contrôle peut également être un flux de données comprenant une succession d'empreintes acoustiques précalculées à partir de la bande son du contenu en cours de restitution sur le dispositif de restitution. Une telle disposition évite au terminal de calculer l'empreinte sur le flux de contrôle reçu et allège les traitements nécessaires à la synchronisation des flux.

Selon une réalisation particulière, le procédé est tel qu'une pluralité de flux de contrôle sont reçus par le terminal, les flux de contrôle correspondant aux pistes audio disponibles sur le dispositif de restitution.

De manière classique, certains dispositifs de restitution offrent la possibilité aux utilisateurs de sélectionner une piste audio particulière parmi une pluralité de pistes audio disponibles. Par exemple, il est courant qu'un décodeur numérique permette à un utilisateur de sélectionner une langue parmi un ensemble de langues disponibles. Le procédé prévoit que toutes les pistes audio mises à disposition de l'utilisateur par le dispositif de restitution soient également transmises vers le terminal sous la forme d'une pluralité de flux de contrôle synchronisés entre eux et avec au moins un flux audio alternatif, flux de contrôle à partir desquels sont obtenues des données représentatives d'extraits sonores. Le procédé permet ainsi la synchronisation d'un flux alternatif reçu sur le terminal avec le contenu restitué sur le dispositif de restitution, quelle que soit la piste audio sélectionnée sur le dispositif de restitution.

Selon un autre aspect, l'invention concerne un procédé d'alignement d'un premier flux audio restitué par un dispositif de restitution à proximité d'un terminal avec un flux audio alternatif reçu par le terminal, le procédé étant tel que le terminal reçoit en outre un flux de contrôle représentatif du flux restitué sur le dispositif de restitution, le flux audio alternatif et le flux de contrôle étant synchronisés selon une même référence temporelle, et tel qu'il comprend, à la réception d'un message comprenant une indication selon laquelle la restitution du flux a été suspendue suite à l'exécution par un second terminal du procédé de synchronisation, les étapes suivantes :
- Obtention, à partir du flux de contrôle, d'une seconde donnée représentative d'une partie du signal audio dont le flux de contrôle est représentatif, et mémorisation d'une première estampille temporelle,
- Capture du signal sonore restitué par le dispositif de restitution,
- Détection de la seconde donnée dans le signal sonore capturé, et

Lorsque la seconde donnée est détectée à partir du signal capturé :
- Détermination d'une seconde estampille temporelle, et
- Application d'un retard au flux audio alternatif, le retard correspondant à l'intervalle temporel entre les premières et secondes estampilles, et
- Restitution du flux audio alternatif reçu par le terminal.

Lorsque la restitution est suspendue sur le dispositif de restitution, un message est envoyé les terminaux. Ce message comprend une indication selon laquelle la restitution du premier flux par le dispositif de restitution a été suspendue suite à l'exécution préalable du procédé de synchronisation par un autre terminal. Une telle disposition permet avantageusement à un second terminal désirant synchroniser la lecture d'un flux alternatif avec la lecture d'un flux sur le dispositif de restitution, de s'affranchir des étapes de capture d'une partie du signal sonore restitué par le dispositif de restitution, d'émission d'une commande de suspension de la lecture du premier flux, de détection de la première empreinte et d'émission d'une commande de reprise de la lecture du premier flux.

Selon un autre aspect, l'invention concerne un dispositif de synchronisation d'un premier flux audio restitué par un dispositif de restitution à proximité avec un flux audio alternatif reçu par le dispositif, le dispositif étant tel qu'il reçoit en outre un flux de contrôle correspondant au premier flux audio restitué sur le dispositif de restitution, le flux de contrôle et le flux audio alternatif étant synchronisés selon une même référence temporelle, et en ce qu'il comprend :
- Une interface audio, adaptée pour capturer une partie du signal sonore restitué par le dispositif de restitution,
- Une interface de communication, adaptée pour recevoir au moins un flux audio alternatif et un flux de contrôle et émettre, à destination du dispositif de restitution, une commande de suspension de la lecture du premier flux,
- Une unité de traitement du signal, adaptée pour obtenir une première donnée représentative d'au moins une partie du signal sonore capturé,
- Un détecteur, configuré pour détecter dans le flux de contrôle, la première empreinte calculée,

L'interface de communication étant en outre adaptée pour émettre, lorsque la première empreinte est détectée dans le flux de contrôle, une commande de reprise de la lecture du premier flux à destination du dispositif de restitution, et l'interface audio étant également adaptée pour restituer le flux audio alternatif reçu par le dispositif.

L'invention se rapporte encore à un terminal comportant un dispositif de synchronisation tel que décrit précédemment.

Les dispositifs et terminaux présentent des avantages analogues à ceux du procédé précédemment présenté.

Dans un mode particulier de réalisation, les différentes étapes du procédé selon l'invention sont déterminées par des instructions de programmes d'ordinateurs.

En conséquence, l'invention vise aussi un programme d'ordinateur comportant des instructions adaptées à la mise en œuvre des étapes d'un procédé tel que décrit ci-dessus, lorsque le programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi support d'enregistrement lisible par un ordinateur sur lequel est enregistré un programme d'ordinateur comprenant des instructions pour l'exécution des étapes du procédé.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, une mémoire flash, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de synchronisation.

### Liste des figures

D'autres caractéristiques et avantages apparaîtront à la lecture de modes de réalisation préférés décrits en référence aux figures parmi lesquelles :
- La figure 1 illustre une architecture adaptée pour la mise en œuvre de l'invention selon un mode de réalisation particulier,
- La figure 2 illustre les principales étapes du procédé de synchronisation selon un mode de réalisation particulier de l'invention,
- La figure 3 illustre les principales étapes du procédé de synchronisation selon un autre mode de réalisation particulier de l'invention,
- La figure 4 illustre les principales étapes du procédé d'alignement selon un mode de réalisation particulier de l'invention, et
- La figure 5 illustre l'architecture d'un dispositif adapté pour mettre en œuvre l'invention selon un mode particulier de réalisation.

### Description détaillée

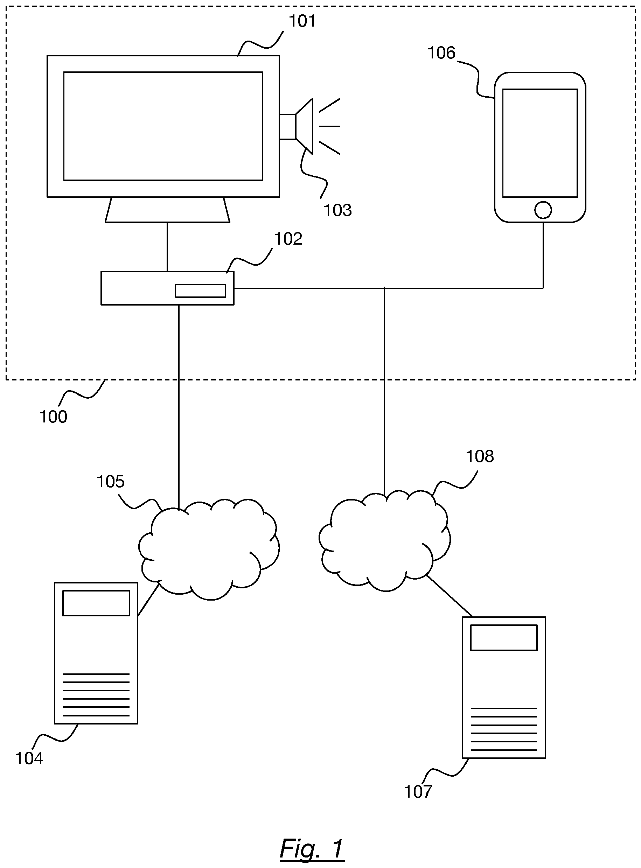

La figure 1 illustre une architecture adaptée pour la mise en œuvre de l'invention selon un mode de réalisation particulier. L'architecture comprend un téléviseur 101 auquel est raccordé un décodeur numérique 102. Le téléviseur et le décodeur constituent ce que nous appellerons dans la suite de cet exposé un dispositif de restitution. Un tel dispositif de restitution est adapté pour recevoir, décoder et restituer un signal audiovisuel reçu par l'intermédiaire d'un réseau de communication ou par radiodiffusion hertzienne ou satellitaire. Il s'agit par exemple d'un poste de télévision raccordé à un récepteur de Télévision Numérique Terrestre, ou encore un décodeur de type « Set Top Box » connecté à un réseau de télécommunication par l'intermédiaire d'un réseau haut débit. Le dispositif de restitution permet ainsi à un utilisateur de visionner des contenus diffusés par un fournisseur de contenu. Le décodeur numérique 102 et le poste de télévision 101 peuvent également être intégrés dans un même équipement, tel qu'une télévision connectée ou un ordinateur personnel. Le décodeur 102 comprend une fonctionnalité permettant à un utilisateur de suspendre momentanément la restitution d'un contenu. Le contenu audiovisuel reçu est alors mémorisé dans une mémoire du décodeur de façon à ce qu'un utilisateur puisse commander la reprise de la restitution sans perdre le contenu diffusé pendant la période de suspension. L'utilisateur peut alors poursuivre le visionnage en différé. Une telle fonctionnalité de pause et de reprise de la lecture en différé est connue et est généralement accessible par l'intermédiaire d'une télécommande associée au décodeur. Certains décodeurs offrent également un accès à cette fonction au travers d'API (Application Programming Interface) qui permettent par exemple de contrôler le décodeur à partir d'applications développées sur des terminaux indépendants, comme par exemple à partir d'un smartphone ou d'une tablette.

Dans cet exemple, le contenu restitué sur le dispositif de restitution est diffusé par un serveur de diffusion 104 au travers d'un réseau multicast de distribution de contenus 105.

L'architecture de la figure 1 comprend également un terminal mobile 106. Il s'agit par exemple d'un terminal de type smartphone, tablette, assistant personnel ou encore un ordinateur comportant une unité de traitement comportant un processeur relié à une ou plusieurs mémoires RAM (Random Access Memory). Le processeur est configuré pour exécuter des instructions chargées dans la mémoire. En particulier, le processeur est adapté pour exécuter des instructions de décodage d'un contenu audio. Le terminal comprend en outre une interface réseau adaptée pour échanger des données avec d'autres terminaux ou serveurs par l'intermédiaire d'une liaison sans fil de type 3G, Wifi ou Bluetooth par exemple. Grâce à cette interface de communication, le terminal peut en particulier émettre, au travers d'un réseau local 100, des commandes pour contrôler le décodeur 102 et recevoir, par l'intermédiaire du réseau de communication 108, des contenus mis à disposition par un serveur 107. Le terminal comprend également une interface audio adaptée pour convertir des signaux numériques en signaux analogiques et inversement. En particulier, le terminal peut capturer et enregistrer sous forme de données numériques un signal sonore à partir d'un microphone intégré au terminal et générer à partir d'un contenu audio numérique un signal sonore par l'intermédiaire d'un haut-parleur ou d'écouteurs individuels. Le terminal 106 est ainsi adapté pour télécharger des flux audio à partir du serveur 107, les décoder et les restituer en continu au travers d'un haut-parleur ou d'un casque d'écoute. Le terminal 106 est en outre positionné à proximité du dispositif de restitution de manière à pouvoir capturer un signal sonore généré par un haut-parleur 103 du dispositif de restitution.

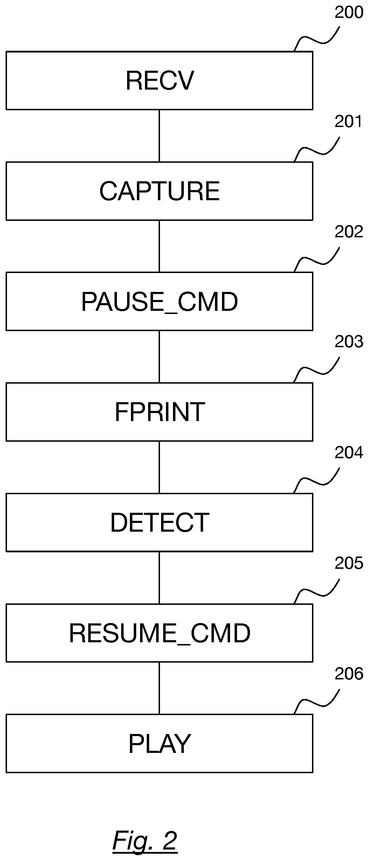

Les principales étapes du procédé de synchronisation vont maintenant être décrites en référence à la figure 2, selon un premier mode de réalisation de l'invention.

Lors d'une première étape 200, le terminal reçoit au moins un flux audio alternatif et au moins un flux de contrôle synchronisés selon une même référence temporelle. Les flux sont par exemple reçus suite à une requête émise par le terminal 106 vers le serveur 107. Pour cela, le terminal peut télécharger un fichier de description des flux disponibles sur le serveur 107, comme par exemple un fichier dit «manifeste» décrivant les flux audio disponibles et les moyens pour y accéder. Après lecture de ce fichier, le terminal s'abonne simultanément à tous les flux audio, les décode et offre à l'utilisateur le choix entre toutes les versions disponibles dans le manifeste. Les flux sont transmis au terminal via un protocole de téléchargement continu, comme par exemple selon le protocole « Smooth Streaming » de Microsoft™. D'autres protocoles de streaming peuvent bien entendu être utilisés pour la mise en œuvre de l'invention, comme par exemple RTP/RTSP (Real Time Protocol/Real Time Streaming Protocol) ou HLS (http Live Streaming). Le flux audio reçu correspond à une piste audio sélectionnée par l'utilisateur du terminal 106 pour remplacer la bande son d'un contenu audiovisuel en cours de restitution sur le dispositif de restitution. Il s'agit par exemple d'un doublage dans une langue qui n'est pas disponible ou qui n'a pas été sélectionnée sur le dispositif de restitution. Le flux de contrôle est représentatif d'un flux audio en cours de restitution sur le dispositif de restitution.

Selon une réalisation particulière de l'invention, le flux de contrôle est un flux audio de qualité identique au flux audio restitué sur le dispositif de restitution. Il peut aussi s'agir d'une copie de moindre qualité du flux audio restitué sur le dispositif de restitution, encodé par exemple selon un débit et/ou un format différent.

Selon un autre mode de réalisation particulier, le flux de contrôle comprend des données calculées à partir du flux audio en cours de restitution sur le dispositif de restitution. Il s'agit par exemple d'une succession d'empreintes ou de signatures calculées à partir d'au moins un flux audio disponible pour une restitution sur le dispositif de restitution.

Les au moins un flux audio et au moins un flux de contrôle sont synchronisés selon une même référence temporelle et diffusés de façon simultanée.

À l'étape 201, le terminal capture une partie du signal sonore correspondant au premier flux audio restitué par le dispositif de restitution. La capture du signal sonore est réalisée grâce à l'interface audio et au microphone du terminal. Cette étape permet d'obtenir une représentation numérique d'une partie du signal sonore généré par le dispositif de restitution d'une durée prédéfinie, par exemple d'une durée de quelques secondes.

Le terminal émet à l'étape 202 une commande de suspension de la restitution du contenu à destination du dispositif de restitution lorsqu'une partie du signal est capturée. Cette commande est émise en utilisant une interface de communication du terminal. Par exemple, la commande peut être insérée dans une requête http émise au travers d'une connexion sans fil de type Wifi et propagée jusqu'au dispositif de restitution par l'intermédiaire d'un réseau local auquel est raccordé le dispositif de restitution. Le dispositif de restitution peut comprendre un serveur Web adapté pour recevoir une telle requête et interpréter des commandes y figurant, et en particulier une commande de suspension insérée par exemple dans un entête ou le corps de la requête http. Selon un autre exemple, la commande peut être transmise par l'intermédiaire d'une connexion Bluetooth ad 'hoc. À la réception d'une telle commande, le dispositif de restitution suspend la restitution et continue à recevoir le flux en cours de restitution. Les données du flux reçu sont alors mémorisées dans une mémoire du dispositif de façon à ce que la restitution puisse reprendre ultérieurement et que le contenu puisse être visionné dans son intégralité. Le serveur web du dispositif de restitution peut alors, selon une réalisation particulière, émettre une réponse au terminal ayant émis la requête. La réponse reçue par le terminal peut comporter une indication selon laquelle la commande à correctement été exécutée, ou le cas échéant, une indication selon laquelle la commande n'a pas pu être exécutée.

Le terminal obtient ensuite **lors** d'une étape 203 une première donnée représentative d'au moins une partie du signal sonore capturé à l'étape 201. Selon une réalisation particulière, une telle donnée représentative est une empreinte acoustique généré à partir du signal audio capturé. Différentes méthodes de calcul d'une empreinte peuvent être utilisées pour mettre en œuvre l'invention. Par exemple, la demande de brevet internationale WO 2013095893 A1 décrit une méthode de calcul d'empreinte acoustique adaptée pour identifier un contenu diffusé en continue sur une télévision. Selon un autre exemple, l'empreinte peut encore être calculée selon la méthode décrite dans la demande de brevet européen EP 2677764 A1. Un tel algorithme de calcul d'empreinte peut être mis en œuvre par une séquence d'instructions exécutées par une unité de traitement du terminal.

Selon un mode de réalisation particulier, la première donnée représentative est une donnée ajoutée au signal audio et adaptée pour être conservée lors de la propagation du signal sonore, sans être décelable par l'oreille humaine. La donnée est alors obtenue par une opération de traitement du signal appliquée aux échantillons reçus, permettant de retrouver la donnée ajoutée au signal. Le brevet US 5940135 A décrit une telle technique. La donnée représentative peut alors être une information de synchronisation associée à un extrait du signal audio, comme par exemple une estampille temporelle ou un identifiant unique de l'extrait.

À l'étape 204, le terminal détecte, dans le flux de contrôle, la donnée représentative obtenue. Selon un mode de réalisation particulier, le flux de contrôle est un flux audio correspondant au flux en cours de restitution sur le dispositif de restitution. L'étape de détection consiste alors à rechercher dans le flux de contrôle la donnée représentative obtenue à l'étape 203. Pour cela, le terminal met en œuvre, à partir des données audio décodées du flux de contrôle, le même algorithme que celui utilisé à l'étape 203 afin d'obtenir une seconde donnée représentative du flux. La donnée est détectée lorsque la seconde donnée représentative correspond à la donnée obtenue à l'étape 203. L'étape de calcul et de comparaison des données représentatives est répétée pour les nouvelles données reçues jusqu'à la détection effective de la donnée.

Selon un mode particulier de réalisation, le flux de contrôle consiste en une succession de données représentatives du flux restitué sur le dispositif de restitution. Il peut s'agir par exemple d'une succession d'empreintes précalculées correspondant à différentes parties du flux en cours de restitution sur le dispositif de restitution. Ainsi le terminal n'a pas à calculer l'empreinte, une simple comparaison de la donnée obtenue à l'étape 203 avec les données transmises dans le flux de contrôle suffit à la détection. Le flux de contrôle peut également consister en une suite d'informations de synchronisation correspondant à différents extraits sonores du flux restitué sur le dispositif de restitution. Ces informations de synchronisation peuvent alors être comparées avec celles obtenue à l'étape 203 à partir du signal sonore capturé pour réaliser la détection.

Lorsque la première donnée obtenue à l'étape 203 est détectée dans le flux de contrôle à l'étape 204 le terminal émet à destination du dispositif de restitution, une commande de reprise de la lecture du premier flux lors d'une étape 205. La restitution du contenu sur le dispositif de restitution a été suspendue à l'obtention de la première donnée représentative à l'étape 203. La détection de cette première donnée dans le flux de contrôle indique que le flux de contrôle est synchronisé avec le flux en cours de restitution sur le dispositif de restitution. Le flux de contrôle étant reçu par le terminal de façon synchronisée avec au moins un autre flux audio alternatif, la détection indique aussi que ce dernier est également synchronisé avec le flux en cours de restitution sur le dispositif de restitution. Le terminal émet alors une commande de reprise de la lecture vers le dispositif de restitution et débute, à l'étape 206, le décodage et la restitution, via un haut-parleur ou un casque d'écoute du terminal par exemple, du flux audio alternatif reçu.

Le procédé permet ainsi de synchroniser un flux audio alternatif reçu sur le terminal avec un contenu audiovisuel restitué sur un dispositif de restitution, lorsque le flux alternatif est en retard par rapport au contenu audiovisuel.

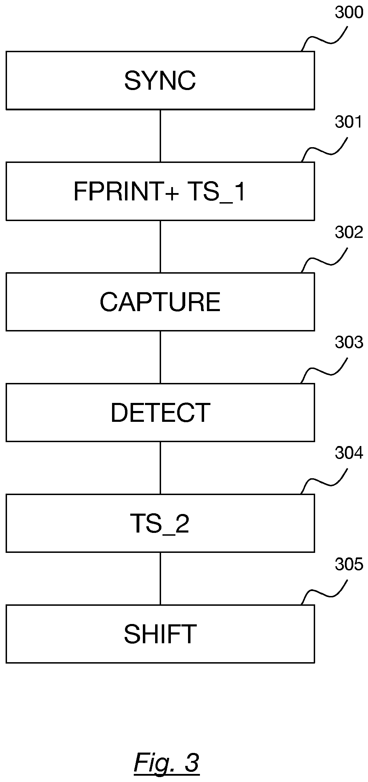

Il peut arriver que la fonctionnalité de suspension et de reprise de la restitution sur le dispositif de restitution n'offre pas une précision suffisante pour obtenir une synchronisation satisfaisante. Dans ce cas, la latence relative au traitement de la commande de reprise de la lecture peut occasionner un retard de la restitution du contenu par le dispositif de restitution par rapport aux flux reçus par le terminal. L'invention apporte une solution à cet inconvénient, selon un mode de réalisation particulier qui va maintenant être décrite en référence à la figure 3.

L'étape 300 référencée sur la figure 3 comprend des étapes analogues aux étapes 200 à 206 décrites précédemment en référence à la figure 2. Lors de cette étape 300, la restitution est suspendue momentanément sur le dispositif de restitution jusqu'à ce que le flux de contrôle reçu par le terminal soit synchronisé avec le flux restitué sur le dispositif de restitution. Pour cela, le terminal calcule par exemple une empreinte à partir d'un extrait du signal sonore émis par le dispositif de restitution et suspend la restitution jusqu'à ce que cette empreinte soit détectée dans le flux de contrôle reçu par le terminal.

À l'étape 301, le terminal obtient, à partir du flux de contrôle, une seconde donnée représentative d'une partie d'un signal audio, et mémorise une première estampille temporelle, la première estampille temporelle correspondant par exemple à l'instant de présentation du dernier échantillon audio de la partie du signal audio ayant servi à obtenir la seconde donnée représentative. La donnée représentative obtenue correspond par exemple à une empreinte acoustique calculée à partir d'un extrait décodé du flux de contrôle, lorsque le flux de contrôle est un flux audio. Une telle empreinte peut par exemple être calculée selon la technique décrite dans la demande de brevet internationale WO 2013095893 A1 ou encore selon la méthode décrite dans la demande de brevet européen EP 2677764 A1. Lorsque, selon une réalisation particulière, le flux de contrôle n'est pas un flux audio mais consiste par exemple en une succession d'empreintes pré-calculées ou d'informations de synchronisation, l'obtention de la seconde donnée représentative consiste en une lecture de la donnée dans le flux de contrôle.

Le terminal effectue à l'étape 302 une capture du signal sonore généré par le dispositif de restitution. Pour cela, le terminal met en œuvre une interface d'acquisition audio comprenant un microphone et un module d'échantillonnage du signal.

Le terminal détecte ensuite à l'étape 303 la donnée représentative dans le signal capturé. Pour cela, selon une réalisation particulière, le terminal peut calculer une empreinte selon la même méthode qu'à l'étape 302 et effectuer une comparaison avec l'empreinte obtenue à l'étape 301. Les étapes de capture, d'obtention d'une seconde donnée représentative et de comparaison de cette donnée avec celle obtenue à l'étape 301 sont répétées à partir de nouveaux échantillons capturés tant que la donnée obtenue à l'étape 301 n'est pas détectée dans le signal sonore capturé. Lorsque la seconde donnée représentative est détectée, une estampille temporelle correspondant par exemple à l'instant de la capture du dernier échantillon utilisé pour obtenir la seconde donnée représentative est mémorisée à l'étape 304. En variante, les première et secondes estampilles temporelles peuvent respectivement correspondre aux instants de réception et de capture de premier échantillon utilisé pour obtenir la donnée représentative correspondante, l'important étant que les premières et secondes estampilles correspondent sensiblement au même extrait sonore dans le signal capturé et le flux de contrôle. Les première et seconde estampilles sont obtenues à partir d'une même horloge du terminal. Ainsi, la différence entre la seconde et la première estampille correspond au décalage observé entre la restitution du contenu audiovisuel par le dispositif de restitution et la réception du flux de contrôle par le terminal.

À l'étape 305, la restitution du flux audio alternatif reçu par le terminal est retardée de la valeur du décalage mesuré entre les deux estampilles. Pour cela, les données décodées à partir du second flux sont mémorisées dans une mémoire tampon du terminal. Selon un mode de réalisation particulier, la restitution des échantillons décodés est suspendue pendant une durée correspondant au retard mesuré, les échantillons décodés étant mémorisés dans la mémoire tampon durant la période de suspension. Il est ainsi possible de compenser le retard pour synchroniser le contenu restitué sur le dispositif de restitution avec le flux audio alternatif reçu par le terminal, avec une précision qui dépend de la mesure du retard. Par exemple, lorsque le retard est estimé par comparaison des empreintes, les flux peuvent être synchronisés avec une précision de l'ordre de quelques dizaines de millisecondes.

Selon un mode particulier de réalisation, une pluralité de flux de contrôle sont reçus par le terminal, les flux de contrôle correspondant aux pistes audio disponibles sur le dispositif de restitution. De façon à pouvoir faire correspondre une donnée représentative, telle qu'un empreinte acoustique caractéristique d'une partie du contenu en cours de restitution sur le dispositif de restitution, avec une donnée représentative d'une partie d'un flux de contrôle reçu sur le terminal, le contenu restitué sur le dispositif de restitution et celui reçu par le terminal doivent correspondre. Or, lorsque plusieurs pistes audio, correspondant par exemple à plusieurs langues, sont disponibles pour le contenu en cours de restitution sur le dispositif de restitution, le terminal n'a pas connaissance à priori de la piste audio sélectionnée par l'utilisateur. Ainsi, le procédé selon l'invention propose qu'une pluralité de flux de contrôle soient reçus par le terminal, chaque flux de contrôle correspondant à une piste audio disponible sur le dispositif de restitution. Ainsi, à l'étape 204, la première donnée représentative est détectée dans chacun des flux de contrôle reçus par le terminal. La détection est effective lorsque la donnée représentative est détectée dans un des flux de contrôle. De même, à l'étape 301, une seconde donnée représentative telle qu'une empreinte acoustique est obtenue pour chaque flux de contrôle reçu, ces différentes données étant comparées à l'étape 303 avec une donnée obtenue à partir du signal sonore capturé. Ainsi, il est possible de synchroniser le contenu restitué sur le dispositif de restitution avec un flux audio alternatif reçu par le terminal, quelle que soit la langue sélectionnée par l'utilisateur sur le dispositif de restitution.

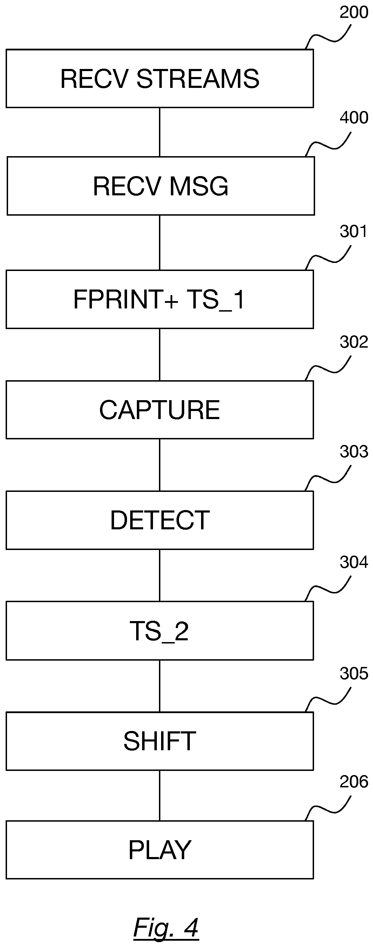

Il peut arriver qu'un second terminal tente de synchroniser un flux audio alternatif avec un contenu en cours de restitution sur un dispositif, de restitution alors que le procédé de synchronisation est déjà en cours d'exécution sur un premier terminal. Dans ce cas, le second terminal peut bénéficier, sans les exécuter, des étapes 201 à 205 déjà réalisées ou en cours de réalisation par le premier terminal. Cet autre aspect de l'invention concerne un procédé d'alignement qui va maintenant être décrit en référence à la figure 4, selon un mode de réalisation particulier.

Lors d'une première étape analogue à l'étape 200 décrite en référence à la figure 1, le terminal reçoit au moins un flux audio alternatif et au moins un flux de contrôle représentatif d'un flux en cours de restitution sur un dispositif, les flux reçus étant synchronisés entre eux selon une même référence temporelle.

À l'étape 400, le terminal reçoit un message comportant une indication selon laquelle la restitution d'un contenu sur le dispositif de restitution est suspendue suite à l'exécution par un second terminal du procédé de synchronisation. Ce message peut être reçu suite à l'émission d'une commande de suspension de la restitution à destination du dispositif de restitution, ou bien suite à l'émission d'une commande de consultation de l'état du dispositif de restitution. Le message peut également être diffusé par un autre terminal qui exécute le procédé de synchronisation. La réception de ce message informe le terminal qu'un certain nombre d'étapes, et en particulier les étapes 202 de suspension de la restitution et 205 de reprise de la restitution ne doivent pas être réalisées car elles risqueraient de désynchroniser le premier terminal. Ainsi, la restitution du contenu sur le dispositif de restitution n'a pas à être retardée.

Le terminal exécute alors les étapes 301 à 305 conformément à celles décrites précédemment en référence à la figure 3, afin d'aligner le flux alternatif reçu avec le contenu restitué par le dispositif de restitution.

Lorsque le flux alternatif est aligné avec le contenu en cours de restitution, le terminal peut déclencher la restitution du flux alternatif conformément à l'étape 206 décrite en référence à la figure 1.

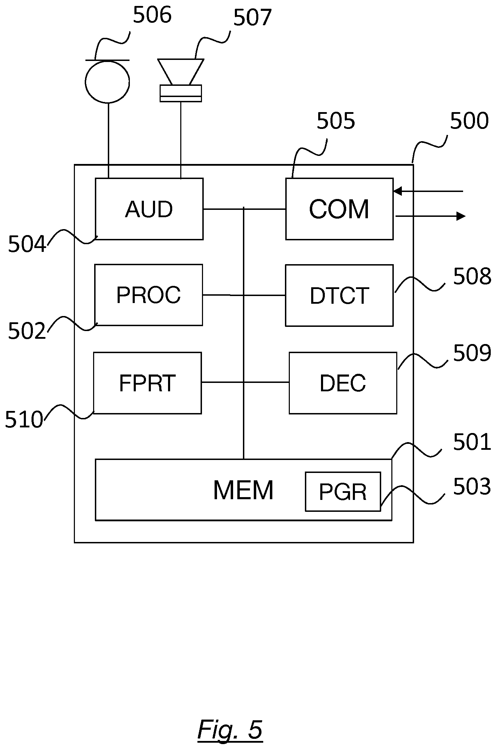

La figure 5 illustre, selon un mode particulier de réalisation de l'invention, un dispositif 500 mettant en œuvre le procédé de synchronisation.

Le dispositif comprend un espace de stockage 501, par exemple une mémoire MEM, une unité de traitement 502 équipée par exemple d'un processeur PROC. L'unité de traitement peut être pilotée par un programme 503, par exemple un programme d'ordinateur PGR, mettant en œuvre le procédé de synchronisation tel que décrit dans l'invention en référence à la figure 2, et notamment les étapes de réception d'un flux audio alternatif synchronisé avec un flux de contrôle, de capture d'une partie du signal sonore restitué par le dispositif de restitution, d'émission, à destination du dispositif de restitution, d'une commande de suspension de la lecture du premier flux, d'obtention d'une première donnée représentative d'au moins une partie du signal sonore capturé, de détection de la première donnée dans le flux de contrôle, et lorsque la première donnée est détectée dans le flux de contrôle, d'émission, à destination du dispositif de restitution, d'une commande de reprise de la lecture du premier flux, et de restitution du flux audio alternatif reçu par le terminal.

À l'initialisation, les instructions du programme d'ordinateur 503 sont par exemple chargées dans une mémoire RAM (Random Access Memory en anglais) avant d'être exécutées par le processeur de l'unité de traitement 502. Le processeur de l'unité de traitement 502 met en œuvre les étapes du procédé de synchronisation selon les instructions du programme d'ordinateur 503.

Pour cela, le dispositif comprend, outre la mémoire 501, des moyens de communication 505, comme par exemple une interface réseau sans fil COM, permettant au dispositif de se connecter à un réseau de télécommunication et d'échanger des données avec d'autres dispositifs par l'intermédiaire du réseau de télécommunications, et en particulier d'émettre des commandes de suspension et de reprise de la lecture à destination d'un dispositif de restitution et de recevoir un ou plusieurs flux en cours de diffusion par un serveur. Le dispositif comprend également une interface audio 504 adaptée pour convertir des signaux numériques en signaux analogiques et inversement. En particulier, le dispositif peut capturer et enregistrer dans la mémoire 501 sous forme de données numériques un signal sonore à partir d'un microphone 506 et générer à partir d'un contenu audio numérique décodé un signal sonore par l'intermédiaire d'un haut-parleur 507 ou d'écouteurs individuels. Le dispositif comprend en outre une unité de traitement 509 adaptée pour décoder un flux audio compressé. Le dispositif est ainsi adapté pour recevoir des flux audio à partir du serveur, les décoder et les restituer en continu au travers d'un haut-parleur ou d'un casque d'écoute.

Le dispositif 500 comprend également une unité de traitement du signal 510 adaptée pour obtenir une donnée représentative d'une partie d'un signal audio. Par exemple, l'unité 510 comprend un processeur configuré pour exécuter des instructions pour calculer une empreinte acoustique représentative d'un extrait d'un signal audio capturé par le microphone 506 et échantillonné par l'interface audio 504, ou bien des instructions pour extraire des données ajoutées dans un signal sonore numérique.

Le dispositif comprend enfin un détecteur 508, configuré pour détecter dans un flux de contrôle, une empreinte acoustique calculée par l'unité de traitement 510. Le détecteur peut être mis en œuvre par un processeur configuré pour exécuter des instructions adaptées pour réaliser une comparaison de deux empreintes numériques.

L'invention peut être mise en œuvre sur des terminaux de type smartphone, tablettes ou ordinateurs personnels et permet d'enrichir l'expérience de télévision traditionnelle telle qu'une diffusion en continu, de vidéo à la demande (VOD) ou de télévision de rattrapage.

## Revendications

1. Procédé de synchronisation d'un premier flux audio restitué sous forme d'un signal sonore par un dispositif de restitution à proximité d'un terminal avec un flux audio alternatif reçu par le terminal, le procédé comportant les étapes de :
- capture (201) d'une partie du signal sonore,
- obtention (203) d'une première donnée représentative d'au moins une partie du signal sonore capturé,
- restitution (206) du flux audio alternatif reçu par le terminal,
le procédé étant **caractérisé en ce que** le terminal reçoit en outre un flux de contrôle représentatif du premier flux audio restitué sur le dispositif de restitution, le flux de contrôle et le flux audio alternatif étant synchronisés selon une même référence temporelle, et **en ce qu'**il comprend les étapes suivantes :
- Émission (202), à destination du dispositif de restitution, d'une commande de suspension de la lecture du premier flux,
- Détection (204) de la première donnée dans le flux de contrôle, et
Lorsque la première donnée est détectée dans le flux de contrôle:
- Émission (205), à destination du dispositif de restitution, d'une commande de reprise de la lecture du premier flux.

2. Procédé selon la revendication 1 **caractérisé en ce que** la première donnée représentative est une empreinte acoustique calculée à partir d'au moins une partie du signal sonore capturé.

3. Procédé selon l'une des revendications 1 ou 2 **caractérisé en ce qu'**il comporte en outre les étapes suivantes :
- Obtention, à partir du flux de contrôle, d'une seconde donnée représentative d'une partie du signal audio dont le flux de contrôle est représentatif, et mémorisation d'une première estampille temporelle,
- Capture du signal sonore restitué par le dispositif de restitution,
- Détection de la seconde donnée dans le signal sonore capturé, et
Lorsque la seconde donnée est détectée dans le signal capturé :
- Détermination d'une seconde estampille temporelle, et
- Application d'un retard au flux audio alternatif, le retard correspondant à l'intervalle temporel entre les premières et secondes estampilles.

4. Procédé selon l'une quelconque des revendications précédentes **caractérisé en ce que** la seconde donnée représentative est une empreinte acoustique calculée à partir d'une partie d'un signal audio.

5. Procédé selon l'une quelconque des revendications précédentes **caractérisé en ce que** le flux de contrôle est un flux audio.

6. Procédé selon l'une quelconque des revendications précédentes **caractérisé en ce qu'**une pluralité de flux de contrôle sont reçus par le terminal, les flux de contrôle correspondant aux pistes audio disponibles sur le dispositif de restitution.

7. Procédé d'alignement d'un premier flux audio restitué sous forme d'un signal sonore par un dispositif de restitution à proximité d'un terminal avec un flux audio alternatif reçu par le terminal, le procédé étant **caractérisé en ce que** le terminal reçoit en outre un flux de contrôle représentatif du premier flux audio restitué sur le dispositif de restitution, le flux de contrôle et le flux audio alternatif étant synchronisés selon une même référence temporelle, et **en ce qu'**il comprend, à la réception d'un message comprenant une indication selon laquelle la restitution du flux à été suspendue suite à l'exécution par un second terminal du procédé selon la revendication 1, les étapes suivantes :
- Obtention, à partir du flux de contrôle, d'une seconde donnée représentative d'une partie du signal audio dont le flux de contrôle est représentatif, et mémorisation d'une première estampille temporelle,
- Capture du signal sonore restitué par le dispositif de restitution,
- Détection de la seconde donnée dans le signal sonore capturé, et
Lorsque la seconde donnée est détectée à partir du signal capturé :
- Détermination d'une seconde estampille temporelle, et
- Application d'un retard au flux audio alternatif, le retard correspondant à l'intervalle temporel entre les premières et secondes estampilles, et
- Restitution du flux audio alternatif reçu par le terminal.

8. Dispositif de synchronisation d'un premier flux audio restitué par un dispositif de restitution à proximité du dispositif avec un flux audio alternatif reçu par le dispositif, le dispositif comportant :
- une interface (504) adaptée pour capturer une partie du signal sonore restitué par le dispositif de restitution et pour restituer le flux audio alternatif reçu par le dispositif,
- Une unité (510) de traitement du signal, adaptée pour obtenir une première donnée représentative d'au moins une partie du signal sonore capturé,
le dispositif étant **caractérisé en ce qu'**il reçoit en outre un flux de contrôle correspondant au premier flux audio restitué sur le dispositif de restitution, le flux de contrôle et le flux audio alternatif étant synchronisés selon une même référence temporelle, et **en ce qu'**il comprend :
- Une interface (505) de communication, adaptée à recevoir au moins un flux audio alternatif et un flux de contrôle et pour émettre, à destination du dispositif de restitution, une commande de suspension de la lecture du premier flux,
- Un détecteur (508), configuré pour détecter dans le flux de contrôle, la première donnée calculée,
L'interface de communication (505) étant en outre adaptée pour émettre, lorsque la première donnée est détectée dans le flux de contrôle, une commande de reprise de la lecture du premier flux à destination du dispositif de restitution.

9. Terminal **caractérisé en ce qu'**il comporte un dispositif de synchronisation selon la revendication 8.

10. Programme d'ordinateur **caractérisé en ce qu'**il comporte les instructions pour l'exécution du procédé de synchronisation selon l'une quelconque des revendications 1 à 6 et/ou les instructions pour l'exécution du procédé d'alignement selon la revendication 7, lorsque le programme est exécuté par un processeur.

11. Support d'informations lisible par un processeur sur lequel est enregistré un programme d'ordinateur comprenant des instructions pour l'exécution des étapes du procédé de synchronisation selon l'une quelconque des revendications 1 à 6 et/ou les instructions pour l'exécution du procédé d'alignement selon la revendication 7.

## Patentansprüche

1. Verfahren zum Synchronisieren eines ersten Audiostroms, der in Form eines Tonsignals von einer Wiedergabevorrichtung in der Nähe eines Endgeräts wiedergegeben wird, mit einem alternativen Audiostrom, der von dem Endgerät empfangen wird, wobei das Verfahren die folgenden Schritte umfasst:
- Erfassen (201) eines Teils des Tonsignals,
- Erhalten (203) eines ersten Datenelements, der für mindestens einen Teil des erfassten Tonsignals repräsentativ ist,
- Wiedergeben (206) des von dem Endgerät empfangenen alternativen Audiostroms, wobei das Verfahren **dadurch gekennzeichnet ist, dass** das Endgerät ferner einen Kontrollstrom empfängt, der für den auf der Wiedergabevorrichtung wiedergegebenen ersten Audiostrom repräsentativ ist, wobei der Kontrollstrom und der alternative Audiostrom nach derselben Zeitreferenz synchronisiert werden, und dadurch, dass es die folgenden Schritte umfasst:
- Senden (202) eines Befehls zum Aussetzen des Abspielens des ersten Stroms an die Wiedergabevorrichtung,
- Detektieren (204) des ersten Datenelements in dem Kontrollstrom und, wenn das erste Datenelement in dem Kontrollstrom detektiert wird:
- Senden (205) eines Befehls zum Wiederaufnehmen des Abspielens des ersten Stroms an die Wiedergabevorrichtung.

2. Verfahren nach Anspruch 1, **dadurch gekennzeichnet, dass** das repräsentative erste Datenelement ein akustischer Fingerabdruck ist, der ausgehend von mindestens einem Teil des erfassten Tonsignals berechnet wird.

3. Verfahren nach einem der Ansprüche 1 oder 2 **dadurch gekennzeichnet, dass** es ferner die folgenden Schritte umfasst:
- Erhalten eines zweiten Datenelements ausgehend von dem Kontrollstrom, das für einen Teil des Audiosignals repräsentativ ist, für das der Kontrollstrom repräsentativ ist, und Speichern eines ersten Zeitstempels,
- Erfassen des von der Wiedergabevorrichtung wiedergegebenen Tonsignals,
- Detektieren des zweiten Datenelements in dem erfassten Tonsignal und, wenn das zweite Datenelement in dem erfassten Signal detektiert wird:
- Bestimmen eines zweiten Zeitstempels und
- Anwenden einer Verzögerung auf den alternativen Audiostrom, wobei die Verzögerung dem Zeitintervall zwischen den ersten und zweiten Stempeln entspricht.

4. Verfahren nach einem der vorhergehenden Ansprüche, **dadurch gekennzeichnet, dass** das zweite repräsentative Datenelement ein akustischer Fingerabdruck ist, der ausgehend von einem Teil eines Audiosignals berechnet wird.

5. Verfahren nach einem der vorhergehenden Ansprüche, **dadurch gekennzeichnet, dass** der Kontrollstrom ein Audiostrom ist.

6. Verfahren nach einem der vorhergehenden Ansprüche, **dadurch gekennzeichnet, dass** von dem Endgerät eine Mehrzahl von Kontrollströmen empfangen wird, wobei die Kontrollströme den an der Wiedergabevorrichtung verfügbaren Audiospuren entsprechen.

7. Verfahren zum Ausrichten eines ersten Audiostroms, der in Form eines Tonsignals von einer Wiedergabevorrichtung in der Nähe eines Endgeräts wiedergegeben wird, an einem vom dem Endgerät empfangenen alternativen Audiostrom, wobei das Verfahren **dadurch gekennzeichnet ist, dass** das Endgerät ferner einen Kontrollstrom empfängt, der für den auf der Wiedergabevorrichtung wiedergegebenen ersten Audiostrom repräsentativ ist, wobei der Kontrollstrom und der alternative Audiostrom nach derselben Zeitreferenz synchronisiert werden, und dadurch, dass es beim Empfangen einer Nachricht, die eine Angabe umfasst, der zufolge die Wiedergabe des Stroms nach der Ausführung des Verfahrens nach Anspruch 1 durch ein zweites Endgerät ausgesetzt wurde, die folgenden Schritte umfasst:
- Erhalten eines zweiten Datenelements ausgehend von dem Kontrollstrom, das für einen Teil des Audiosignals repräsentativ ist, für das der Kontrollstrom repräsentativ ist, und Speichern eines ersten Zeitstempels,
- Erfassen des von der Wiedergabevorrichtung wiedergegebenen Tonsignals,
- Detektieren des zweiten Datenelements in dem erfassten Tonsignal und, wenn das zweite Datenelement ausgehend von dem erfassten Signal detektiert wird:
- Bestimmen eines zweiten Zeitstempels und
- Anwenden einer Verzögerung auf den alternativen Audiostrom, wobei die Verzögerung dem Zeitintervall zwischen den ersten und zweiten Stempeln entspricht, und
- Wiedergeben des von dem Endgerät empfangenen alternativen Audiostroms.

8. Verfahren zum Synchronisieren eines ersten Audiostroms, der von einer Wiedergabevorrichtung in der Nähe der Vorrichtung wiedergegeben wird, mit einem alternativen Audiostrom, der von der Vorrichtung empfangen wird, wobei die Vorrichtung umfasst:
- eine Schnittstelle (504), die geeignet ist, einen Teil des vom Wiedergabevorrichtung wiedergegebenen Tonsignals zu erfassen und den von der Vorrichtung empfangenen alternativen Audiostrom wiederzugeben,
- eine Signalverarbeitungseinheit (510), die geeignet ist, ein erstes Datenelement zu erhalten, das für mindestens einen Teil des erfassten Tonsignals repräsentativ ist, wobei die Vorrichtung **dadurch gekennzeichnet ist, dass** sie ferner einen Kontrollstrom empfängt, der dem auf der Wiedergabevorrichtung wiedergegebenen ersten Audiostrom entspricht, wobei der Kontrollstrom und der alternative Audiostrom nach derselben Zeitreferenz synchronisiert werden, und dadurch, dass es umfasst:
- eine Kommunikationsschnittstelle (505), die geeignet ist, mindestens einen alternativen Audiostrom und einen Kontrollstrom zu empfangen und an die Wiedergabevorrichtung einen Befehl zum Aussetzen des Abspielens des ersten Stroms zu senden,
- einen Detektor (508), der dazu ausgestaltet ist, in dem Kontrollstrom das berechnete erste Datenelement zu detektieren,
wobei die Kommunikationsschnittstelle (505) ferner geeignet ist, wenn das erste Datenelement in dem Kontrollstrom detektiert wird, einen Befehl zum Wiederaufnehmen des Abspielens des ersten Stroms an die Wiedergabevorrichtung zu senden.

9. Endgerät, **dadurch gekennzeichnet, dass** es eine Synchronisationsvorrichtung nach Anspruch 8 beinhaltet.

10. Computerprogramm, **dadurch gekennzeichnet, dass** es Anweisungen beinhaltet, die bei der Ausführung des Programms durch einen Prozessor das Synchronisationsverfahren nach einem der Ansprüche 1 bis 6 und/oder das Ausrichtungsverfahren nach Anspruch 7 ausführen.

11. Von einem Prozessor lesbarer Datenträger, auf dem ein Computerprogramm gespeichert ist, das Anweisungen zum Ausführen der Schritte des Synchronisationsverfahrens nach einem der Ansprüche 1 bis 6 und/oder Anweisungen zum Ausführen des Ausrichtungsverfahrens nach Anspruch 7 umfasst.

## Claims

1. Method for synchronizing a first audio stream played back in the form of a sound signal by a playback device in proximity to a terminal with an alternative audio stream received by the terminal, the method comprising the steps of:
- Capture (201) of a part of the sound signal,
- Obtainment (203) of a first datum representative of at least a part of the captured sound signal,
- Playback (206) of the alternative audio stream received by the terminal,
the method being **characterized in that** the terminal also receives a control stream representative of the first audio stream played back on the playback device, the control stream and the alternative audio stream being synchronized according to a same time reference, and **in that** it comprises the following steps:
- Emission (202), to the playback device, of a command to pause reading of the first stream,
- Detection (204) of the first datum in the control stream, and
When the first datum is detected in the control stream:
- Emission (205), to the playback device, of a command to resume reading of the first stream.

2. Method according to Claim 1, **characterized in that** the first representative datum is an acoustic imprint computed from at least a part of the captured sound signal.

3. The method according to either of Claims 1 and 2, **characterized in that** it also comprises the following steps:
- Obtainment, from the control stream, of a second datum representative of a part of the audio signal of which the control stream is representative, and memorization of a first time stamp,
- Capture of the sound signal played back by the playback device,
- Detection of the second datum in the captured sound signal, and
When the second datum is detected in the captured signal:
- Determination of a second time stamp, and
- Application of a delay to the alternative audio stream, the delay corresponding to the time interval between the first and second stamps.

4. Method according to any one of the preceding claims, **characterized in that** the second representative datum is an acoustic imprint computed from a part of an audio signal.

5. Method according to any one of the preceding claims, **characterized in that** the control stream is an audio stream.

6. Method according to any one of the preceding claims, **characterized in that** a plurality of control streams are received by the terminal, the control streams corresponding to the audio tracks available on the playback device.

7. Method for aligning a first audio stream played back in the form of a sound signal by a playback device in proximity to a terminal with an alternative audio stream received by the terminal, the method being **characterized in that** the terminal also receives a control stream representative of the first audio stream played back on the playback device, the control stream and the alternative audio stream being synchronized according to a same time reference, and **in that** it comprises, on receipt of a message comprising an indication according to which the playback of the stream has been paused following the execution by a second terminal of the method according to Claim 1, the following steps:
- Obtainment, from the control stream, of a second datum representative of a part of the audio signal of which the control stream is representative, and memorization of a first time stamp,
- Capture of the sound signal played back by the playback device,
- Detection of the second datum in the captured sound signal, and
When the second datum is detected from the captured signal:
- Determination of a second time stamp, and
- Application of a delay to the alternative audio stream, the delay corresponding to the time interval between the first and second stamps, and
- Playback of the alternative audio stream received by the terminal.

8. Device for synchronizing a first audio stream played back by a playback device in proximity to the device with an alternative audio stream received by the device, the device comprising:
- An interface (504), adapted to capture a part of the sound signal played back by the playback device and to play back the alternative audio stream received by the device,
- A signal processing unit (510), adapted to obtain a first datum representative of at least a part of the captured sound signal,
the device being **characterized in that** it also receives a control stream corresponding to the first audio stream played back on the playback device, the control stream and the alternative audio stream being synchronized according to a same time reference, and **in that** it comprises:
- A communication interface (505), adapted to receive at least an alternative audio stream and a control stream and to emit, to the playback device, a command to pause the reading of the first stream,
- A detector (508), configured to detect, in the control stream, the first computed datum,
The communication interface (505) being also adapted to emit, when the first datum is detected in the control stream, a command to resume the reading of the first stream to the playback device.

9. Terminal, **characterized in that** it comprises a synchronization device according to Claim 8.

10. Computer program, **characterized in that** it comprises instructions for the execution of the synchronization method according to any one of Claims 1 to 6 and/or the instructions for the execution of the alignment method according to Claim 7, when the program is run by a processor.

11. Processor-readable information medium, on which is stored a computer program comprising instructions for the execution of the steps of the synchronization method according to any one of Claims 1 to 6 and/or the instructions for the execution of the alignment method according to Claim 7.
